# EUROPÄISCHE PATENTSCHRIFT

(11) **EP 2 079 622 B1**
(45) Veröffentlichungstag und Bekanntmachung des Hinweises auf die Patenterteilung: **20.07.2011**
(21) Anmeldenummer: 07820958.2
(22) Anmeldetag: 05.10.2007
(51) Int. Cl.: B60W 20/00, B60K 6/48, F16H 59/38

(54) **VERFAHREN ZUM BETREIBEN EINER HYBRIDANTRIEBSVORRICHTUNG MIT EINEM DREHMOMENTWANDLER**
METHOD FOR OPERATING A HYBRID DRIVE DEVICE HAVING A TORQUE CONVERTER
PROCÉDÉ DE FONCTIONNEMENT D'UN DISPOSITIF PROPULSEUR HYBRIDE MUNI D'UN CONVERTISSEUR DE COUPLE

(30) Priorität: 12.10.2006 DE 102006048355
(43) Veröffentlichungstag der Anmeldung: 22.07.2009
(73) Patentinhaber: Robert Bosch GmbH, 70442 Stuttgart (DE)
(72) Erfinder: SEEL, Andreas, 71282 Hemmingen (DE); SCHENK, Rene, 71732 Tamm (DE); KAEFER, Oliver, 71711 Murr (DE); JUENEMANN, Thorsten, 71069 Sindelfingen (DE)
(86) Internationale Anmeldenummer: PCT/EP2007/060584
(87) Internationale Veröffentlichungsnummer: WO 2008/043712

(56) Entgegenhaltungen:
- WO-A-2004/026606
- DE-A1- 19 748 423
- DE-A1-102004 002 061
- DE-A1-102004 002 705
- US-A1- 2004 153 231

## Beschreibung

Die Erfindung betrifft ein Verfahren zum Betreiben einer Hybridantriebsvorrichtung, insbesondere eines Kraftfahrzeugs, aufweisend mindestens eine elektrische Maschine und eine Brennkraftmaschine, wobei zwischen elektrischer Maschine und Brennkraftmaschine eine Trennkupplung und zwischen elektrischer Maschine und einem Hybridantrieb-Abtrieb ein Drehmomentwandler mit einem Turbinenrad vorgesehen ist, wobei zum Starten der Brennkraftmaschine die Trennkupplung geschlossen wird.

### Stand der Technik

Die eingangs beschriebene Konfiguration einer Hybridantriebsvorrichtung erlaubt ein rein elektrisches Fahren mit der elektrischen Maschine, wobei die Trennkupplung geöffnet ist und so die Brennkraftmaschine nicht mit dem übrigen Antriebsstrang der Hybridantriebsvorrichtung wirkverbunden ist. In diesem Zustand wird die Brennkraftmaschine bevorzugt ausgestellt, um Kraftstoff zu sparen. Da sie nicht mit dem übrigen Antriebsstrang wirkverbunden ist, überträgt sie kein (negatives) Schleppmoment, welches durch die elektrische Maschine kompensiert werden müsste.

Bei einem höheren Leistungsbedarf und/oder mit zunehmender Entladung einer zur elektrischen Maschine gehörenden Batterie muss die Brennkraftmaschine gestartet werden. Bei Brennkraftmaschinen, die einen Starter beziehungsweise Anlasser aufweisen, wird dieser zum Starten verwendet. Bei Brennkraftmaschinen ohne Starter, wird das Starten der Brennkraftmaschine durch Schließen der Trennkupplung im Fahrbetrieb erreicht, wobei die Trennkupplung auf ein definiertes Schlupfmoment gesteuert wird. Mit diesem Schlupfmoment wird die Brennkraftmaschine beschleunigt, bis sie die gleiche Drehzahl wie die elektrische Maschine erreicht hat, wobei das zusätzliche Moment durch die elektrische Maschine bereitgestellt werden muss, damit sich das Antriebsdrehmoment am Hybridantrieb-Abtrieb nicht verändert. Da das tatsächliche Schlupfmoment der Trennkupplung nicht genau ermittelt werden kann, ist es nicht möglich die elektrische Maschine einfach mit einem entsprechendem, zusätzlichen Moment anzusteuern. Die Drehzahl der elektrischen Maschine ist dagegen gut messbar und auch dynamisch regelbar, sodass während des Startvorgangs die Drehzahl geregelt wird.

Aus dem Stand der Technik ist ein Verfahren bekannt, bei dem die Drehzahl der elektrischen Maschine zu Beginn des Startvorgangs der Brennkraftmaschine als Sollwert für den gesamten Start festgehalten wird. Nachteilig dabei ist, dass bei einer gleichzeitigen Beschleunigung oder Verzögerung des Kraftfahrzeugs sich der resultierende Schlupf des Drehmomentwandlers verändert. Dies kann beispielsweise bei gleichzeitiger Getriebeschaltung so weit gehen, dass die Schlupfrichtung des Drehmomentwandlers wechselt und sich damit das Drehmoment umkehrt, was zu einem deutlich spürbaren Ruck führt.

Darüber hinaus ist ein Verfahren bekannt, bei dem die Drehzahlentwicklung aus dem Drehzahlverlauf vor dem Startvorgang extrapoliert wird. Da jedoch die Fahrstrecke, wie zum Beispiel eine Steigung oder ein Gefälle, nicht bekannt ist, ist das Ergebnis nicht sicher voraussagbar. Die Merkmale des Oberbegriffes des Auspruches 1 sind aus DE 102004002705 bekannt.

### Offenbarung der Erfindung

Erfindungsgemäß ist vorgesehen, dass der elektrischen Maschine in Abhängigkeit von der Drehzahl des Turbinenrads des Drehmomentwandlers eine derartige Drehzahl vorgegeben wird, dass an dem Hybridantrieb-Abtrieb beim Startvorgang der Brennkraftmaschine kein Drehmomentsprung entsteht. Die Drehzahl des Turbinenrads entspricht der Drehzahl, die am Ausgang beziehungsweise der Abtriebswelle des Drehmomentwandlers vorliegt und ist somit gleich der Getriebeeingangsdrehzahl eines hinter dem Drehmomentwandler geschalteten Getriebes. Ist die Drehzahl des Turbinenrads bekannt, kann durch Regeln der Drehzahl der elektrischen Maschine ein gewünschter Schlupf in dem hydraulischen Drehmomentwandler eingestellt werden, der eine Funktion von einem übertragenen Drehmoment ist. Durch Einstellen der Drehzahl der elektrischen Maschine in Abhängigkeit von der Drehzahl des Turbinenrads, wobei die Drehzahl der elektrischen Maschine der Drehzahl eines, das Turbinenrad antreibenden, Pumpenrads entspricht, kann ein Drehmomentsprung beim Starten der Brennkraftmaschine verhindert, beziehungsweise ein konstantes Drehmoment gewährleistet werden.

Vorteilhafterweise wird die Drehzahl der elektrischen Maschine durch Addition der Drehzahl des Turbinenrades mit einer Soll-Schlupfdrehzahl bestimmt. Die Schlupfdrehzahl entspricht dabei dem Deltawert aus der Drehzahl des Turbinenrads und der der elektrischen Maschine. Wie bereits gesagt, ist die Schlupfdrehzahl proportional zu einem übertragenen Drehmoment des hydraulischen Drehmomentwandlers. Durch Addition einer Soll-Schlupfdrehzahl, die das zu übertragende Drehmoment bestimmt, auf die Drehzahl des Turbinenrads, wird somit die Drehzahl der elektrischen Maschine bestimmt. Da die momentane Getriebeeingangsdrehzahl, also die Drehzahl des Turbinenrads, als Basis für die Bestimmung der Drehzahl der elektrischen Maschine verwendet wird, ist das Verfahren unabhängig von einer Veränderung der Fahrgeschwindigkeit und/oder einer Getriebeschaltung während des Startvorgangs der Brennkraftmaschine.

Zweckmäßigerweise wird die Soll-Schlupfdrehzahl in Abhängigkeit von der Drehzahl des Turbinenrads und einem Hybridantrieb-Abtriebs-Solldrehmoment ermittelt, sodass das von dem Drehmomentwandler zu übertragene Drehmoment eingestellt werden kann.

Vorteilhafterweise wird die Soll-Schlupfdrehzahl einem, beispielsweise in einer Steuereinheit der Hybridantriebsvorrichtung hinterlegten, Kennfeld entnommen. Dieses kann in einer dem Fachmann bekannten Art und Weise berechnet werden.

Nach einer Weiterbildung der Erfindung wird die Drehzahl der elektrischen Maschine in Abhängigkeit von einem Fahrer-Antriebswunschmoment vorgegeben, sodass die Schlupfdrehzahl ständig auch an das Fahrer-Antriebswunschmoment angepasst wird, sodass das Gefühl vermieden wird, die Hybridantriebsvorrichtung wäre während des Startvorgangs der Brennkraftmaschine vom Fahrpedal abgekoppelt.

Eine weitere bevorzugte Ausführungsform der Erfindung ist dadurch gekennzeichnet, dass die Soll-Schlupfdrehzahl in Abhängigkeit einer Betriebsart der Hybridantriebsvorrichtung begrenzt wird. So ist es von Vorteil, für beispielsweise eine Betriebsart die ein komfortables Fahren ermöglicht, wenn keine plötzlichen Drehmomentänderungen auftreten, wie zum Beispiel wenn der Fahrer seinen Fuß vom Fahrpedal nimmt.

Besonders bevorzugt wird zum Begrenzen der Soll-Schlupfdrehzahl ein Nulldurchgangsformer verwendet. Dieser begrenzt die zulässige Änderungsgeschwindigkeit der Schlupf-Drehzahl, in Abhängigkeit vom Absolutwert der aktuellen Schlupfdrehzahl. Dabei werden mit abnehmender Schlupfdrehzahl immer kleiner werdende Änderungen zugelassen. Dadurch wird erreicht, dass bei einem Vorzeichenwechsel des Drehmomentes der Nulldurchgang langsam erfolgt und der Antriebsstrang der Hybridantriebsvorrichtung nicht nachteilig angeregt wird.

Nach einer Weiterbildung der Erfindung wird für den Startvorgang eine Überbrückungskupplung des Drehmomentwandlers geöffnet. Die Überbrückungskupplung sorgt im geschlossenen Zustand dafür, dass ein an dem Pumpenrad anliegendes Drehmoment direkt - reibschlüssig - auf das Turbinenrad übertragen wird, sodass kein Schlupf zwischen Pumpenrad und Turbinenrad möglich ist. Für den Startvorgang der Brennkraftmaschine wird die Überbrückungskupplung geöffnet, damit ein Schlupf ermöglicht wird, und somit das erfindungsgemäße Verfahren verwendet werden kann.

### Kurze Beschreibung der Zeichnungen

Im Folgenden soll die Erfindung anhand von zwei Figuren näher erläutert werden. Dazu zeigen die
- Figur 1: eine schematische Darstellung einer Hybridantriebsvorrich- tung mit einer Trennkupplung und einem hydraulischen Drehmomentwandler und die
- Figur 2: das erfindungsgemäße Verfahren in einer schematischen Darstellung.

### Ausführungsform(en) der Erfindung

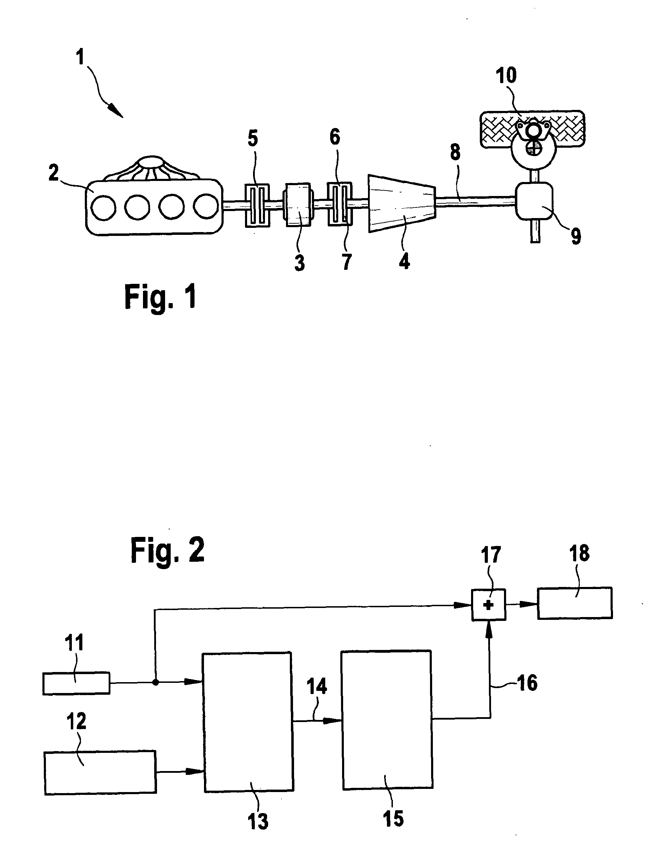

Die Figur 1 zeigt in einer schematischen Darstellung ein Ausführungsbeispiel einer vorteilhaften Hybridantriebsvorrichtung 1. Die Hybridantriebsvorrichtung 1 weist eine Brennkraftmaschine 2, eine elektrische Maschine 3 und ein Automatik-Getriebe 4 auf, die in einer Reihe angeordnet sind, wobei zwischen der Brennkraftmaschine 2 und der elektrischen Maschine 3 eine Trennkupplung 5, und zwischen der elektrischen Maschine 3 und einem Hybridantrieb-Abtrieb, der hier den Antrieb des Getriebes 4 darstellt, ein Drehmomentwandler 6, von dem hier nur eine Überbrückungskupplung 7 dargestellt ist, angeordnet sind. An dem Getriebe 4 führt eine Abtriebswelle 8 zu einem Differenzialgetriebe 9, von dem das Fahrzeugantriebsdrehmoment auf ein beispielhaft dargestelltes Rad 10 übertragen wird. Bei einem rein elektrischen Fahrbetrieb, ist die Trennkupplung 5 geöffnet, sodass allein die elektrische Maschine 3 ein Antriebsmoment auf den Antriebsstrang 1 bewirkt. Um die Brennkraftmaschine 2 im Fahrbetrieb zu starten, wird die Trennkupplung 5 mit einem definierten Kupplungsmoment geschlossen. Um einen Drehmomentsprung im Fahrzeugantriebsmoment zu verhindern, wird die Drehzahl der elektrischen Maschine vorteilhafterweise in Abhängigkeit von der Drehzahl des Turbinenrads des Drehmomentwandlers 6, wie in der Figur 2 schematisch dargestellt, vorgegeben. Zweckmäßigerweise wird für den Startvorgang die Überbrückungskupplung 7 geöffnet.

Die Figur 2 zeigt in einem Blockschaltbild ein Ausführungsbeispiel des erfindungsgemäßen Verfahrens. Die momentane Drehzahl 11 des Turbinenrades des Drehmomentwandlers 6 aus der Figur 1 und ein Hybridantrieb-Abtrieb-Solldrehmoment 12, welches einem Fahrer-Antriebswunschmoment entsprechen kann, werden der Steuereinheit 13 zugeführt, die die notwendige Schlupfdrehzahl für das Hybridantrieb-Abtrieb-Solldrehmoment 12 in Abhängigkeit von der Drehzahl 11 des Turbinenrads berechnet. Vorteilhafterweise werden die dafür notwendigen Daten aus einem Kennfeld, das in der Steuereinheit 13 hinterlegt ist, entnommen. Eine resultierende Schlupfdrehzahl 14, die eine Funktion von dem vom Drehmomentwandler 6 übertragenen Antriebssolldrehmoment ist, wird durch einen Nulldurchgangsformer 15 begrenzt, sodass bei einem Vorzeichenwechsel des übertragenen Drehmoments der Nulldurchgang langsam erfolgt und dadurch keine Anregung des Antriebsstranges erfolgt. Der Nulldurchgangsformer begrenzt dabei vorteilhafterweise die zulässige Änderungsgeschwindigkeit der Schlupfdrehzahl über eine Funktion, die abhängig vom Absolutwert des aktuellen Schlupfes des Drehmomentwandlers 6 ist, wobei die Funktion ebenfalls abhängig von einer Betriebsart, wie zum Beispiel komfortables Fahren oder sportliches Fahren, sein kann. Dadurch werden mit abnehmendem Schlupf beziehungsweise abnehmender Differenzgeschwindigkeit von Pumpenrad und Turbinenrad des Drehmomentwandlers 6 immer kleiner werdende Änderungen zugelassen. Die so begrenzte Soll-Schlupfdrehzahl 16 wird anschließend mittels eines Addierers 17 auf die Drehzahl 11 des Turbinenrades aufaddiert, wodurch sich eine Solldrehzahl 18 für die elektrische Maschine 3 ergibt.

Der Schlupf des Drehmomentwandlers 6 wird hierbei also jeweils passend zu einem Hybridantrieb-Abtrieb-Solldrehmoment 12 gesteuert. Wobei die Ansteuerung unabhängig von der Veränderung der Fahrgeschwindigkeit des Fahrzeugs und/oder einer Getriebeschaltung des Getriebes 4 ist, da immer die momentane Getriebeeingangsdrehzahl, die der Drehzahl 11 des Turbinenrades entspricht, als Basis verwendet wird. Weiterhin wird der Schlupf vorteilhafterweise auch ständig an einen Fahrerwunsch angepasst, sodass Änderungen am Fahrpedal während des Startvorgangs der Brennkraftmaschine 2 berücksichtigt werden, sodass das Gefühl, der Antrieb wäre während des Startvorgangs von dem Fahrpedal abgekoppelt, vermieden wird. Zweckmäßigerweise wirkt die oben beschriebene Drehzahlregelung der elektrischen Maschine 3 nur während des Startvorgangs der Brennkraftmaschine 2.

## Patentansprüche

1. Verfahren zum Betreiben einer Hybridantriebsvorrichtung, insbesondere eines Kraftfahrzeugs, aufweisend mindestens eine elektrische Maschine (3) und eine Brennkraftmaschine (2), wobei zwischen elektrischer Maschine und Brennkraftmaschine eine Trennkupplung (5) und zwischen elektrischer Maschine und einem Hybridantrieb-Abtrieb ein Drehmomentwandler (6) mit einem Turbinenrad (7) vorgesehen ist, wobei zum Starten der Brennkraftmaschine die Trennkupplung geschlossen wird, wobei der elektrischen Maschine in Abhängigkeit von der Drehzahl des Turbinenrads des Drehmomentwandlers eine derartige Drehzahl vorgegeben wird, dass an dem Hybridantrieb-Abtrieb beim Startvorgang der Brennkraftmaschine kein Drehmomentsprung entsteht **dadurch gekennzeichnet, dass** die Drehzahl (18) der elektrischen Maschine (3) durch Addition der Drehzahl des Turbinenrads (11) mit einer Soll-Schlupfdrehzahl (16) des Drehmomentwandlers (6) bestimmt wird.

2. Verfahren nach Anspruch 1, **dadurch gekennzeichnet, dass** die Soll-Schlupfdrehzahl in Abhängigkeit von der Drehzahl des Turbinenrads und einem Hybridantrieb-Abtriebs-Solldrehmoment (12) ermittelt wird.

3. Verfahren nach einem oder mehreren der vorhergehenden Ansprüche, **dadurch gekennzeichnet, dass** die Soll-Schlupfdrehzahl einem Kennfeld (13) entnommen wird.

4. Verfahren nach einem oder mehreren der vorhergehenden Ansprüche, **dadurch gekennzeichnet, dass** die Drehzahl der elektrischen Maschine (3) in Abhängigkeit von einem Fahrer-Antriebswunschmoment vorgegeben wird.

5. Verfahren nach einem oder mehreren der vorhergehenden Ansprüche, **dadurch gekennzeichnet, dass** die Soll-Schlupfdrehzahl in Abhängigkeit einer Betriebsart der Hybridantriebsvorrichtung begrenzt wird.

6. Verfahren nach einem oder mehreren der vorhergehenden Ansprüche, **dadurch gekennzeichnet, dass** zum Begrenzen der Soll-Schlupfdrehzahl ein Nulldurchgangsformer verwendet wird.

7. Verfahren nach einem oder mehreren der vorhergehenden Ansprüche, **dadurch gekennzeichnet, dass** eine Überbrückungskupplung des Drehmomentwandlers für den Startvorgang geöffnet wird.

## Claims

1. Method for operating a hybrid drive apparatus, in particular of a motor vehicle, having at least one electrical machine (3) and an internal combustion engine (2), with a separating clutch (5) being provided between the electrical machine and the internal combustion engine, and a torque converter (6) with a turbine wheel (7) being provided between the electrical machine and a hybrid drive output, with the separating clutch being closed in order to start the internal combustion engine, with such a rotation speed being prespecified to the electrical machine as a function of the rotation speed of the turbine wheel of the torque converter that there is no jump in torque at the hybrid drive output during the starting process of the internal combustion engine, **characterized in that** the rotation speed (18) of the electrical machine (3) is determined by adding the rotation speed of the turbine wheel (11) to a setpoint slip rotation speed (16) of the torque converter (6).

2. Method according to Claim 1, **characterized in that** the setpoint slip rotation speed is ascertained as a function of the rotation speed of the turbine wheel and a setpoint torque (12) of the hybrid drive output.

3. Method according to one or more of the preceding claims, **characterized in that** the setpoint slip rotation speed is taken from a characteristic diagram (13) .

4. Method according to one or more of the preceding claims, **characterized in that** the rotation speed of the electrical machine (3) is prespecified as a function of a drive torque requested by a driver.

5. Method according to one or more of the preceding claims, **characterized in that** the setpoint slip rotation speed is limited as a function of a mode of operation of the hybrid drive apparatus.

6. Method according to one or more of the preceding claims, **characterized in that** a zero crossing former is used in order to limit the setpoint slip rotation speed.

7. Method according to one or more of the preceding claims, **characterized in that** a lock-up clutch of the torque converter is opened for the starting process.

## Revendications

1. Procédé pour faire fonctionner un dispositif d'entraînement hybride, en particulier d'un véhicule automobile, présentant au moins une machine électrique (3) et un moteur à combustion interne (2), un embrayage de séparation (5) étant prévu entre la machine électrique et le moteur à combustion interne et un convertisseur de couple (6) avec une roue de turbine (7) étant prévu entre la machine électrique et une prise de force d'entraînement hybride, l'embrayage de séparation étant fermé pour le démarrage du moteur à combustion interne, la machine électrique étant pré-animée, en fonction de la vitesse de rotation de la roue de turbine du convertisseur de couple, d'une vitesse de rotation telle qu'il ne se produise au niveau de la prise de force d'entraînement hybride, lors de l'opération de démarrage du moteur à combustion interne, aucun saut de couple, **caractérisé en ce que** la vitesse de rotation (18) de la machine électrique (3) est déterminée en additionnant la vitesse de rotation de la roue de turbine (11) à une vitesse de rotation de glissement de consigne (16) du convertisseur de couple (6).

2. Procédé selon la revendication 1, **caractérisé en ce que** la vitesse de rotation de glissement de consigne est déterminée en fonction de la vitesse de rotation de la roue de turbine et d'un couple de consigne de prise de force de l'entraînement hybride (12).

3. Procédé selon l'une quelconque ou plusieurs des revendications précédentes, **caractérisé en ce que** la vitesse de rotation de glissement de consigne est obtenue dans un champ caractéristique (13).

4. Procédé selon l'une quelconque ou plusieurs des revendications précédentes, **caractérisé en ce que** la vitesse de rotation de la machine électrique (3) est prédéfinie en fonction d'un couple d'entraînement souhaité par le conducteur.

5. Procédé selon l'une quelconque ou plusieurs des revendications précédentes, **caractérisé en ce que** la vitesse de rotation de glissement de consigne est limitée en fonction d'un mode de fonctionnement du dispositif d'entraînement hybride.

6. Procédé selon l'une quelconque ou plusieurs des revendications précédentes, **caractérisé en ce que** pour la limitation de la vitesse de rotation de glissement de consigne, on utilise un formeur de passage à zéro.

7. Procédé selon l'une quelconque ou plusieurs des revendications précédentes, **caractérisé en ce qu'**un embrayage de pontage du convertisseur de couple est ouvert pour l'opération de démarrage.
